# EUROPEAN PATENT SPECIFICATION

(11) **EP 3 395 742 B1**
(45) Date of publication and mention of the grant of the patent: **06.01.2021**
(21) Application number: 17382234.7
(22) Date of filing: 28.04.2017
(51) Int. Cl.: B66B 7/02

(54) **STRETCHING TENSIONER**
STRECKSPANNER
TENDEUR D'ÉTIREMENT

(43) Date of publication of application: 31.10.2018
(73) Proprietor: Alimak Group Management AB, 111 51 Stockholm (SE)
(72) Inventor: Dapena Gomez, Nicolas, 50017 Zaragoza (ES)
(74) Representative: ZBM Patents - Zea, Barlocci & Markvardsen

(56) References cited:
- GB-A- 846 096
- JP-A- S54 136 056
- US-A1- 2015 075 295

## Description

The present disclosure relates to stretching tensioners, particularly stretching tensioners for guide wires. The present disclosure further relates to wire-guided lifts and wind turbines comprising such stretching tensioners.

### BACKGROUND

Wire-guided lifts are commonly used for the transportation of people and/or equipment which are hoisted up and down within vertical structures such as wind turbine towers or mine shafts, for instance. Wires or ropes are extended from a top suspension beam to a bottom platform of the tower or shaft to serve as guiding elements for the lift cabin. The guide wires must be kept tensioned at a certain loading to get a reliable lift path, otherwise the running of the lift would not be steady and the risk of collision between the lift cabin and the surrounding structure could increase.

The usual practice is to anchor one end of the guide wires, usually the upper ends of the guide wires, to suitable anchors. Then the guide wires are tensioned by suitable tensioners commonly installed at the basement, below the lift bottom platform. These tensioners usually involve a wire lock that clamps on the guide wire and a tensioning mechanism which provides tension to the guide wire by reacting against the bottom platform. These tensioners are equipped with elastic members intended *inter alia* for regulating the tension (length) applied to the wires and for absorbing the forces generated by lateral movement of the lift cabin guide wires. That construction is necessary to obtain both a balanced action-reaction force pair and absorption of overstress.

As the guide wires require periodic checks and adjustments of their tension, maintenance personnel typically must access the area below the bottom platform.

In different implementations and in particular wind turbines, which are also known as wind turbine generators (WTG), such an arrangement involves several drawbacks:
- the maintenance personnel have to shut down the wind turbine generator to avoid the risk of electrocution when accessing the area below the bottom platform. This means a loss of power production;
- the bottom of construction may be submerged in water or may be covered by material (sump at the bottom of the mine shaft, for instance), which may hinder the maintenance works (time consuming and potentially dangerous) and may deteriorate the tensioning devices.

When it comes to installations with relatively long wire ropes another drawback of the known tensioners is related to their poor capacity for stretching the longer guide wire ropes. Typically, they do not show enough capacity and are limited to relative short guide wire ropes. Similar problems may occur with tensioners in other constructions.

GB 846,096 discloses a rope tensioning means specifically designed for mine shafts. It comprises a tensioning device for engaging a support which is designed for tensioning guide wires. The tensioning device comprises a spring which may be compressed in order to adjust the tensioning of the guide wire. A nut is located under the platform of the lift for compressing the spring. Therefore, workers have to access the space below the platform or support in order to adjust the applied tension.

It is an object of the present disclosure to provide examples of tensioners and methods for tensioning that avoid or at least reduce the afore-mentioned drawbacks.

### SUMMARY

In a first aspect, a stretching tensioner for a guide wire is provided.

The tensioner comprises a tensioner base attachable to a lift platform and having a first opening, a housing located on a bottom side of the tensioner base for housing the guide wire, and a wire lock clamped on the guide wire underneath the housing and fixing the guide wire with respect to a base of the housing. The housing comprises a hollow threaded shaft that extends through the first opening from a top side of the tensioner base to the bottom side of the tensioner base, the hollow threaded shaft having an external thread and an internal through hole for the guide wire, an activation nut located on the top side of the tensioner base, and rotatably fixed to the hollow threaded shaft. The housing further comprises a bearing between the hollow threaded shaft and the bottom side of the tensioner base for allowing rotation of the hollow threaded shaft with respect to the tensioner base, a tensioning nut with a thread mating with the external thread of the hollow threaded shaft, wherein the tensioning nut is axially displaceable within the housing but rotatably fixed to the housing, and a resilient element arranged between the tensioning nut and the base of the housing such that upon rotation of the activation nut the tensioning nut moves axially to compress the resilient element.

According to this aspect, maintenance personnel must no longer access into the basement of the construction for adjusting the tension of the guide wire. The construction may comprise, for instance, a wind turbine or a mineshaft. All the periodic checks and adjustments of guide wire tension may be done from the upper side of the bottom lift platform owing to the configuration of the housing, since the tensioning nut may be operated through the activation nut which is accessible from the upper side of the bottom lift platform. The activation nut is rotatably fixed to the hollow threaded shaft. Upon rotation of the activation nut, the hollow threaded shaft rotates as well with respect to the tensioner base thanks to a bearing between the tensioner base and hollow threaded shaft. Upon rotation of the hollow threaded shaft, the tensioning nut displaces axially thereby compressing (or decompressing) the resilient element between the tensioning nut and the base of the housing. The position of the housing with respect to the guide wire is fixed due to the wire lock. A downward force on the housing thus provides tension in the guide wire.

Since the activation nut is on an upper side of the platform, wind turbine generators do not need to be shut down when the periodic checks and adjustments of the tensioners are required. Therefore, power generation need not be interrupted.

The duration of the maintenance works (in wind turbines and other structures) may be reduced as it is not necessary to access the area beneath the lift platform. The regulation may be simpler and faster.

Last but not least, the tensioner according to this aspect may provide safer and more comfortable work conditions. The risk of electrocution in wind turbine generators may be reduced, and workers have enough space to conveniently develop their maintenance tasks.

Throughout the present disclosure, expressions such as above, below, beneath, under, upper, bottom, etc are to be understood taking into account the construction of an elevator or the like in an operating condition as a reference.

Throughout the present disclosure, the terms "lift" and "elevator" are used interchangeably. The term "elevator cabin" or "elevator car" are used to indicate a structure that is used for housing people and/or goods as they are moved up and downwards by the elevator.

Throughout the present disclosure, a shaft is to be understood as a space or passage through which the lift or the like can travel upwards and downwards. In a wind turbine tower, the elevator shaft is thus defined inside the tower. There may be a closed space inside the tower along which an elevator cabin travels. Alternatively, the space inside the tower through which the elevator travels may be open.

In some examples, the tensioner may further comprise a pre-tension mechanism, the pre-tension mechanism comprising: a pre-tension rod with a through-hole for the guide wire, the pre-tension rod having an outer thread, a pre-tension wire lock clamped on the guide wire underneath the pre-tension rod fixing the guide wire with respect to the pre-tension rod, and a pushing nut arranged on the pre-tension rod having an internal thread mating with the outer thread of the pre-tension rod, such that a distance between the pushing nut and the pre-tension wire lock can be adjusted.

According to that further example, the capacity of the stretching device applied to relatively long guide wires may be improved. The pre-tension mechanism may allow pre-stretching the guide wire rope and its strands becoming compact. The tension in the guide wire may increase until elastic deformation may arise owing to the increase of distance between the pushing nut and the pre-tension wire lock. Then follows the stretching by means of the housing: The guide wire rope stretches elastically until a predefined amount. As the pre-tension mechanism acts on the strands compacting them, the housing may not be required to do so and may be designed to apply a greater amount of tension on the guide wire.

In a further aspect, the present disclosure provides a wire-guided lift which may comprise a stretching tensioner as hereinbefore described.

In another aspect, the present disclosure provides a wind turbine tower which may comprise a stretching tensioner as hereinbefore described.

### BRIEF DESCRIPTION OF THE DRAWINGS

Non-limiting examples of the present disclosure will be described in the following, with reference to the appended drawings, in which:
Figure 1 shows a longitudinal top isometric cross section view of a stretching tensioner according to an example;
Figure 2 shows a bottom isometric view of the stretching tensioner of figure 1 during a pre-stretch adjustment;
Figure 3 shows a bottom isometric view of the stretching tensioner of figure 1 in a further step of the pre-stretch adjustment of figure 2;
Figure 4 shows a longitudinal cross section view of the stretching tensioner during a pre-stretching adjustment;
Figure 5 shows a longitudinal cross section view of the stretching tensioner of figure 3;
Figure 6 shows a longitudinal cross section view of the stretching tensioner according to another example during a stretch adjustment;
Figure 7 shows a longitudinal cross section view of the stretching tensioner of figure 6 during a further step of the stretch adjustment of figure 6.

### DETAILED DESCRIPTION OF EXAMPLES

In these figures the same reference signs have been used to designate matching elements.

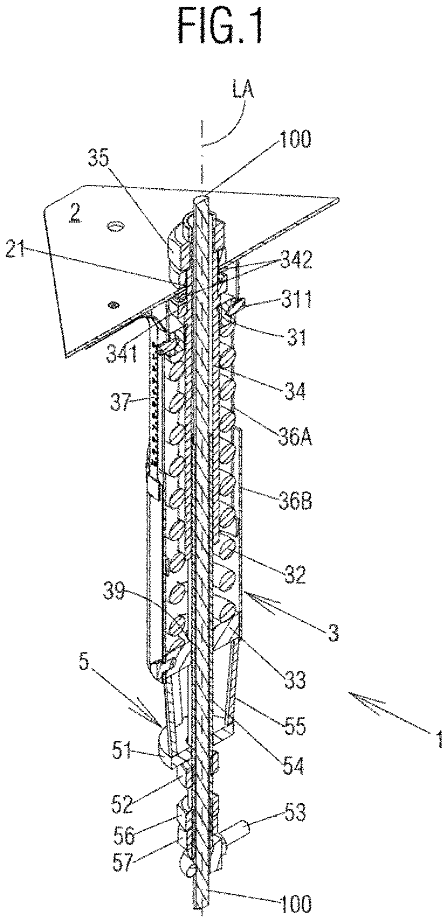

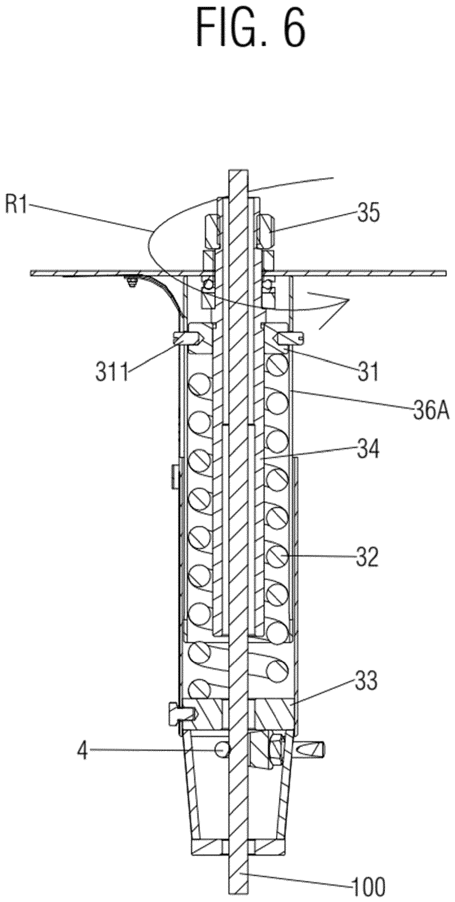

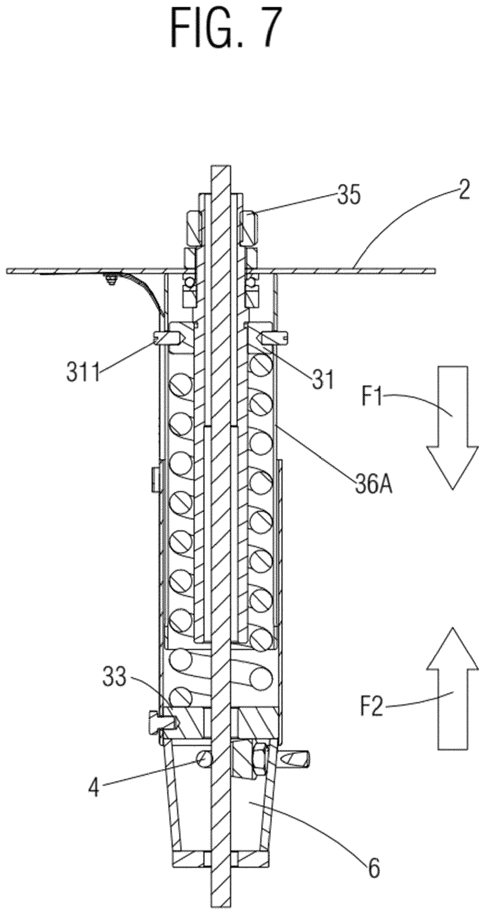

Figure 1 shows a longitudinal top isometric cross section view in top perspective of a stretching tensioner 1 for a guide wire 100 according to an example. The stretching tensioner 1 may comprise:
A housing 3 conceived to house a portion of the guide wire 100. The stretching tensioner in this example further comprises a tensioner base 2 which may be attached to a lift bottom platform 200 and which may comprise a first opening 21. The tensioner base 2 may be attachable to any kind of lift platform 200. In particular, the tensioner base 2 may be mounted to a lowermost or "starting" platform. A wire lock 4 which may be configured to clamp the guide wire 100 just below the bottom of housing 3, see figures 6 and 7. All the parts of the stretching device 1 may be conceived so as to receive the passing-through guide wire 100 as per figure 1.

As can be seen in the attached figures, for instance 6 and 7, the housing 3 may be arranged between the tensioner base 2 and the wire lock 4, such that an action-reaction force pair F1, F2 may be defined between the housing 3 and the wire lock 4.

Further in this example, the housing 3 comprises a tensioning nut 31 which has threads mating outer threads of threaded hollow shaft 34. A resilient element 32, which in this example is a compression spring, is provided between the tensioning nut 31 and a base 33 of the housing 3, the resilient element 32 may be configured to urge the base 33 towards the wire lock 4. In the illustrated examples the tensioning nut 31 may be urged towards the tensioner base 2 and away from both the base 33 and the wire lock 4, by the action of the resilient element 32. The resilient element 32 may comprise a spring, such as a helical or coil spring able to receive the guide wire 100 along its longitudinal axis. However, any other part resilient or elastic element may be envisaged to provide the housing 3 with elastic properties and therefore being able to tension the guide wire 100 and/or absorbing any overstress transmitted by the guide wire 100. As per the attached figures, the base 33 may comprise a third opening 39 through which the guide wire 100 may be led.

A hollow threaded shaft 34 has outer threads that mate with tensioning nut 31. The guide wire 100 is arranged to pass through an inner through hole of hollow threaded shaft 34. Activation nut 35 may be fixed on the hollow threaded shaft such that rotation of the activation nut 35 results in rotation of hollow threaded shaft 34.

The tensioning nut 31 may be movable along the hollow threaded shaft 34 and with respect the tensioner base 2, such that the biasing force of the resilient element 32 may be adjustable. The relative movement of the tensioning nut 31 and the hollow threaded shaft 34 will be explained later in detail. In any case, the movement may be aimed to vary the overall length of the resilient element 32 by compressing or releasing it. The adjustment of length implies an adjustment of the tension applied to the guide wire 100 and consequently an adjustment of a degree of stretching. Examples as per the attached illustrations may comprise a tensioning nut 31 being urged towards the tensioner base 2 so the tension applied to the guide wire 100 may be increased by shortening the length of the resilient element 32. Thereby the guide wire 100 may be stretched.

The stretching tensioner 1 according to an example may further comprise a pre-tension mechanism 5 which may comprise:
A pre-tension rod 54 with a through-hole for the guide wire 100, the pre-tension rod 54 may have an outer thread; a pre-tension wire lock 53 may be clamped on the guide wire 100 underneath the pre-tension rod 54 fixing the guide wire 100 with respect to the pre-tension rod 54; a pushing nut 52 arranged on the pre-tension rod 54 may have an internal thread mating with the outer thread of the pre-tension rod 54, such that a first distance between the pushing nut 52 and the pre-tension wire lock 53 may be adjusted. The pre-tension rod 54 may pass through a third opening 39.

The pre-tension mechanism 5 may further comprise a pre-tensioner base 51 that may be fixed with respect to the base 33 of the housing 3, wherein the pushing nut 52 may be arranged to abut against the pre-tensioner base 51 when pre-tensioning the guide wire 100.

It should be noted that the pre-tensioner base 51 may adopt a plurality of configurations, e.g. circular-shaped or square-shaped. The pre-tensioner base 51 may be attached to the housing 3 and may comprise a bore configured to receive the pre-tension rod 54.

The pre-tension rod 54 may be configured to tension the guide wire 100 through the respective abutments of the pre-tension rod 54 on the pre-tension wire lock 53 and the pushing nut 52 on the pre-tensioner base 51. In any case the distance between the pushing nut 52 and the pre-tension wire lock 53 may be adjustable at a predefined degree.

In some alternative examples, the pre-tension mechanism 5 may further comprise: a locknut 57 for jamming up against a pre-tension nut 56 when pre-tensioning the guide wire 100. The pre-tension nut 56 and the locknut 57 may be arranged on the pre-tension rod 54 and both of them may have an internal thread mating with the outer thread of the pre-tension rod 54, such that a second distance between the pushing nut 52 and respectively the pre-tension nut 56 and the locknut 57 may be adjusted to a predefined amount. As a consequence, the first distance may also be adjusted.

The operation of the pre-tension mechanism 5 for the above described examples will be explained later in detail.

In some examples, the housing 3 may further comprise two cover parts 36A, 36B telescopically connected to each other and configured to house the resilient element 32.

In further examples, the activation nut 35 may be arranged so that it "emerges" from the first opening 21. This configuration allows an improved access for maintenance personnel. The activation nut 35 may be arranged over the tensioner base 2 level, but in any case the activation nut 35 is accessible from the upper side of the lift platform 2.

According to further examples, the housing 3 may further comprise an axial bearing 342 arranged between the hollow threaded shaft 34 and the bottom side of the tensioner base 2, so that the hollow threaded shaft 34 may be able to rotate about its longitudinal axis LA through the operation of the activation nut 35. The hollow threaded shaft 34 may have a seat 341 where the hollow threaded shaft 34 may abut, so the axial bearing 342 may be arranged between the seat 341 and the tensioner base 2.

In some examples, the tensioning nut 31 may be arranged rotatably fixed with respect the hollow threaded shaft 34 for instance by means of rotation impeding pins 311 or the like (keys) which slide relative to respective slots of one cover part 36A. The tensioning nut 31 may be coupled through mating threads with the hollow threaded shaft 34. The rotation impeding pins 311 may be positioned at the tensioning nut 31 and may protrude from it. Therefore, the tensioning nut 31 may be axially displaceable but rotatably fixed with respect to the housing 3.

In examples of the stretching tensioner 1 the housing 3 may further comprise a measuring tape 37 which may be provided at one cover part 36B of the housing 3 and a cooperating index mark at the other cover part 36A of the housing 3, and a second opening 22 which may be arranged in the tensioner base 2 and configured to provide a view of the measuring tape 37.

In more examples, the pre-tensioner base 51 may be attached to the housing 3 through connecting elements 55 so that a locking chamber 6 may be defined among the pre-tensioner base 51, the connecting elements 55 and the base 33. The quantity and shape of connecting elements 55 may vary but in the herein illustrated examples there are three arms.

The herein disclosed examples of the stretching tensioner 1 may be form part of a wire-guided lift. Such a wire guided lift may be implemented in a wind turbine tower or in another structure.

In the following, the operation of an example of the stretching tensioner 1 which comprises a pre-tension mechanism 5 will be explained. This example regards a basement of a tower of a wind power generator.

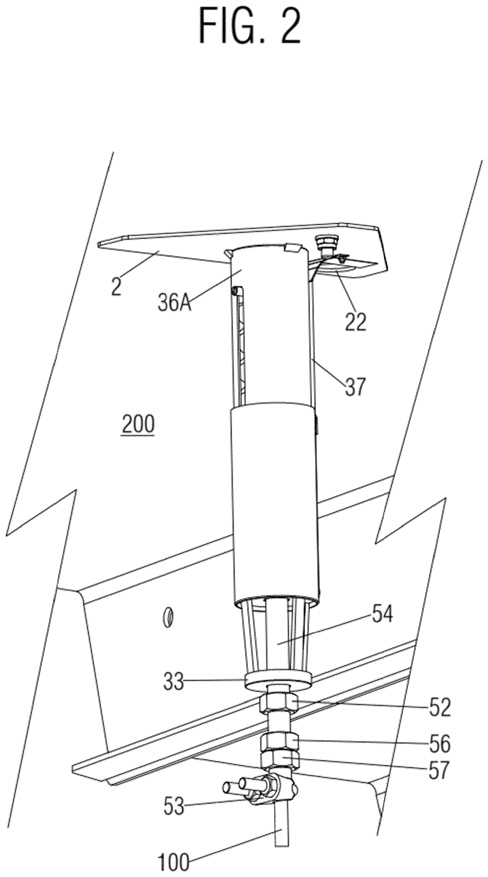

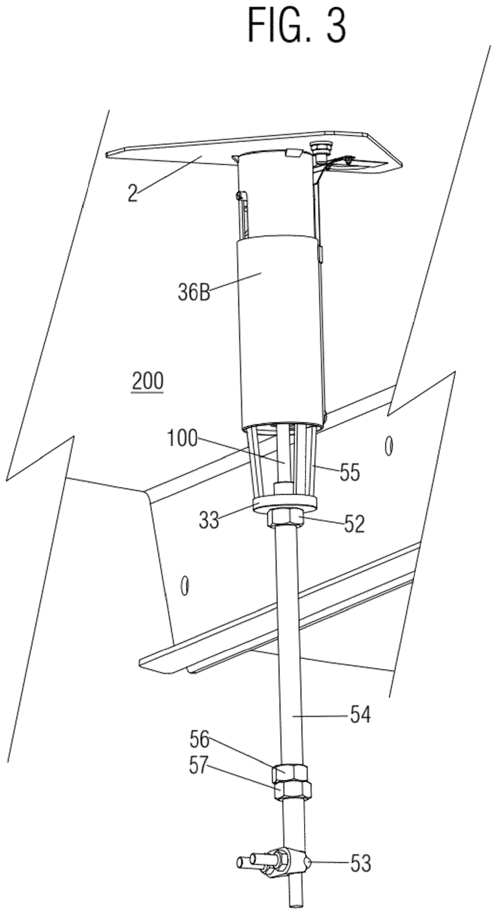

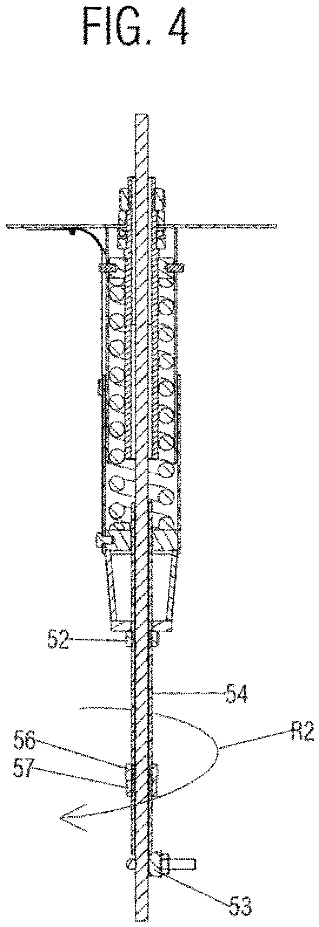

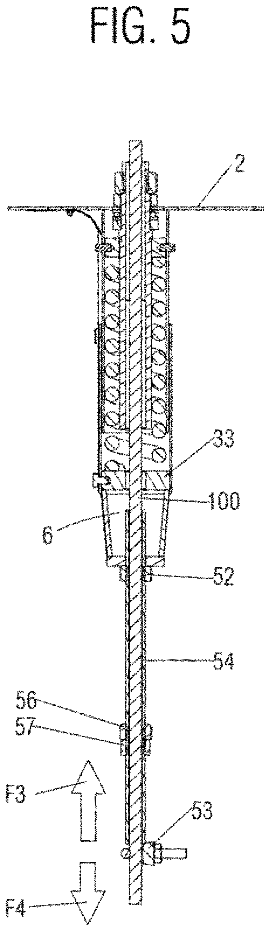

Figures 2-5 are related to different steps of a pre-stretch adjustment; figures 3, 5 illustrate a step after that one of figures 2, 4.

Figure 2 shows a bottom isometric view of an example of the stretching tensioner 1 during a pre-stretch adjustment and figure 4 shows a longitudinal cross section view of the stretching tensioner 1 according to the same example. The guide wire 100 may be passed through all the parts of the stretching tensioner 1 which are conceived to receive it including the pre-tension mechanism 5 such as the pre-tensioner base 51 and the pre-tension rod 54. Before starting the operation the strands (not shown) of the guide wire 100 are not tensioned. The user then places the pre-tension wire lock 53 at the guide wire 100 and near the lower end of the pre-tension rod 54. It should be noted that at the very beginning of the pre-stretch adjustment the pre-tension rod 54 may be introduced into the housing, particularly surrounded by the resilient element 32 and received by the third opening 39 of the base 33.

Depending on the structure of the pre-tension mechanism 5, the user may act in different ways:
When the pre-tension mechanism 5 comprises the pre-tension nut 56 and the locknut 57, the user blocks the pushing nut 52 by using a wrench for example, to allow a relative movement between the pushing nut 52 and the pre-tension rod 54. The user may turn the pre-tension nut 56 towards the pre-tension wire lock 53 but the locknut 57 prevent the pre-tension nut 56 from moving relative to the pre-tension rod 54. That is to say, the lock nut 57 is jammed up against the pre-tension nut 56 so both the pre-tension nut 56 and the lock nut 57 are tightened against each other.

As the pre-tension nut 56 has become fixed with respect to the pre-tension rod 54, turning the pre-tension nut 56 implies turning the pre-tension rod 54 about its longitudinal axis. By blocking the pushing nut 52 in position, for instance by using a wrench, and turning the pre-tension nut 56 (R2), the pushing nut 52 and the pre-tension rod 54 move relatively to each other. Then the pre-tension rod 54 moves downwards relative to the pre-tensioner base 51 and abuts against the pre-tension wire lock 53. Therefore, the first distance or separation between the pushing nut 52 and the pre-tension wire lock 53 may be adjusted. The pre-tension may be achieved.

Figure 3 shows a bottom isometric view of the same example of the stretching tensioner 1 as figures 2, 4 but in a further step of the pre-stretch adjustment and figure 5 shows a longitudinal cross section view of the stretching tensioner 1 according to the same example. When pushing nut 52 reaches the pre-tensioner base 51 and the pre-tension rod 54 reaches the pre-tension wire lock 53 the guide wire 100 may become stretched. Once at least a portion of the length of the pre-tension rod 54 comes out of the third opening 39 of the base 33, a wire lock 4 may be assembled on the guide wire 100 below the base 33. The respective abutments of the pre-tension rod 54 on the pre-tension wire lock 53 and the pushing nut 52 on the pre-tensioner base 51 may produce another action-reaction pair force F3, F4 between the pre-tension wire lock 53 and the pre-tensioner base 51, pre-tensioning the guide wire 100 (see figure 5).

The wire lock 4 may be fixed on the guide wire 100 by taking advantage of the locking chamber 6 which may be defined between the pre-tensioner base 51, the connecting elements 55 and the base 33.

Once a predefined pre-stretch loading level on the guide wire 100 is achieved the user may follow as will be explained. It should be noted that an example of the stretching tensioner 1 without the pre-tension mechanism 5 might also be used to follow the next depicted "normal" stretch adjustment. Examples comprising the pre-tension mechanism 5 might be used to perform both the pre-stretch and the stretch adjustment.

As the above described pre-stretch adjustment may be done only during the installation of the lift, it does not matter that a worker may be beneath the lift bottom platform 200 to carry out the pre-stretch adjustment.

In the following the operation of an example of the stretching tensioner 1 which comprises a pre-tension mechanism 5 will be explained. However, figures 6, 7 do not illustrate all the parts of such pre-tension mechanism 5 for the sake of clarity.

Figure 6 shows a longitudinal cross section view of the stretching tensioner 1 according to another example during a stretch adjustment whereas figure 7 shows a longitudinal cross section view of the stretching tensioner 1 during a further step of the cited stretch adjustment. In order to stretch the guide wire 100 this one may be pre-tensioned or not. In any case the guide wire 100 may be led along the longitudinal axis of the stretching tensioner 1. A wire lock 4 may be assembled on the guide wire 100 below the base 33. That operation may be already done during the pre-tension adjustment. Once the wire lock 4 is placed, the user, positioned above the lift bottom platform 200, may turn the hollow threaded shaft 34 through the activation nut 35 (R1) giving as a result the relative movement between the hollow threaded shaft 34 and the tensioning nut 31. As previously explained, the hollow threaded shaft 34 may comprise a threated outer surface. The tensioning nut 31 may be arranged rotatably fixed relative to the hollow threaded shaft 34 so the turning of the hollow threaded shaft 34 about its longitudinal axis causes the longitudinal movement of the tensioning nut 31 along the hollow threaded shaft 34. Figures 1, 6-7 show the rotation impeding pins 311 sliding relative to the respective slots of one cover part 36A.

In some examples, the rotation impeding pins 311 may act as the index mark by sliding along the slot, and the tape 37 may be arranged next and along the slot.

The hollow threaded shaft 34 may be able to freely rotate about its longitudinal axis LA owing to the arrangement of the axial bearing 342.

As the tensioning nut 31 moves away from the tensioner base 2, the resilient element 32 may become compressed towards the base 33 (see figure 6). The base 33 may abut the wire lock 4 so the compressed resilient element 32 urges the base 33 and indirectly the wire lock 4. Therefore an action-reaction force pair F1, F2 may be generated between the housing 3 and the wire lock 4. The length of the guide wire 100 may be shortened along the lift shaft.

The user may tune the tension applied to the guide wire 100, which may be previously pre-tensioned or not through the pre-stretch adjustment, from the upper side of the lift platform 200 since the hollow threaded shaft 34 may be easily accessible through the first opening 21 and the second opening 22 may allow to precisely determine the value of tension.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. Stretching tensioner (1) for tensioning a guide wire (100) comprising:
a tensioner base (2) attachable to a lift platform (200) and having a first opening (21),
a housing (3) located on a bottom side of the tensioner base for housing the guide wire, and
a wire lock (4) clamped on the guide wire underneath the housing and fixing the guide wire with respect to a base of the housing,
**characterized in that** the housing comprises:
a hollow threaded shaft (34) that extends through the first opening from a top side of the tensioner base to the bottom side of the tensioner base, the hollow threaded shaft having an external thread and an internal through hole for the guide wire,
an activation nut (35) located on the top side of the tensioner base, and rotatably fixed to the hollow threaded shaft,
a bearing (342) between the hollow threaded shaft and the bottom side of the tensioner base for allowing rotation of the hollow threaded shaft with respect to the tensioner base,
a tensioning nut (31) with a thread mating with the external thread of the hollow threaded shaft, wherein the tensioning nut is axially displaceable within the housing but rotatably fixed to the housing,
a resilient element (32) arranged between the tensioning nut and the base (33) of the housing such that upon rotation of the activation nut the tensioning nut moves axially to compress the resilient element.

2. A stretching tensioner (1) according to claim 1, further comprising a pre-tension mechanism (5), the pre-tension mechanism comprising:
a pre-tension rod (54) with a through-hole for the guide wire, the pre-tension rod having an outer thread,
a pre-tension wire lock (53) clamped on the guide wire underneath the pre-tension rod fixing the guide wire with respect to the pre-tension rod,
a pushing nut (52) arranged on the pre-tension rod having an internal thread mating with the outer thread of the pre-tension rod, such that a first distance between the pushing nut and the pre-tension wire lock can be adjusted.

3. A stretching tensioner (1) according to claim 2, wherein the pre-tension mechanism further comprises a pre-tensioner base (51) that is fixed with respect to the base of the housing, wherein the pushing nut is arranged to abut against the pre-tensioner base when pre-tensioning the guide wire.

4. A stretching tensioner (1) according to any of claims 2-3, wherein the pre-tension mechanism further comprises:
a locknut (57) for jamming up against a pre-tension nut (56) when pre-tensioning the guide wire; wherein the pre-tension nut and the locknut are arranged on the pre-tension rod and have an internal thread mating with the outer thread of the pre-tension rod, such that a second distance between the pushing nut and respectively the pre-tension nut and the locknut can be adjusted.

5. A stretching tensioner (1) according to any of claims 1-4, wherein the housing (3) further comprises:
two cover parts (36A, 36B) telescopically connected to each other and configured to house the resilient element.

6. A stretching tensioner (1) according to claim 5, wherein the housing further comprises:
a measuring tape (37) provided at one cover part (36B) of the housing and a cooperating index mark at the other cover part (36A),
a second opening (22) arranged in the tensioner base and configured to provide a view of the measuring tape.

7. A stretching tensioner (1) according to any of claims 1-6, wherein the tensioning nut is arranged rotatably fixed with respect the hollow threaded shaft.

8. A stretching tensioner (1) according to any of claims 2-7, wherein the pre-tensioner base is attached to the housing through connecting elements (55) so that a locking chamber (6) is defined between the pre-tensioner base, the connecting elements and the base of the housing.

9. A stretching tensioner (1) according to any of claims 1-8, wherein the resilient element comprises a spring.

10. A wire-guided lift comprising a stretching tensioner (1) according to any of claims 1-9.

11. A wind turbine tower comprising a stretching tensioner (1) according to any of claims 1-9.

## Patentansprüche

1. Streckspanner (1) zum Spannen eines Führungsdrahtes (100) umfassend:
eine Spannbasis (2), die an einer Hebebühne (200) befestigt werden kann und eine erste Öffnung (21) hat,
ein Gehäuse (3), das sich auf einer Unterseite der Spannbasis befindet, um den Führungsdraht aufzunehmen, und
eine Drahtverriegelung (4), die auf dem Führungsdraht unter dem Gehäuse festgeklemmt ist und den Führungsdraht in Bezug auf eine Basis des Gehäuses befestigt,
**dadurch gekennzeichnet, dass** das Gehäuse folgendes umfasst:
eine hohle Gewindewelle (34), die sich durch die erste Öffnung von einer Oberseite der Spannbasis bis zur Unterseite der Spannbasis erstreckt, wobei die hohle Gewindewelle ein Außengewinde und ein Innendurchgangsloch für den Führungsdraht hat,
eine Aktivierungsmutter (35), die sich auf der Oberseite der Spannbasis befindet und in Bezug auf die hohle Gewindewelle drehfest ist,
ein Lager (342) zwischen der hohlen Gewindewelle und der Unterseite der Spannbasis, um eine Drehung der hohlen Gewindewelle in Bezug auf die Spannbasis zu ermöglichen,
eine Spannmutter (31) mit einem Gewinde, das mit dem Außengewinde der hohlen Gewindewelle zusammenpasst, wobei die Spannmutter innerhalb des Gehäuses axial verschiebbar, aber drehfest in Bezug auf das Gehäuse ist,
ein nachgiebiges Element (32), das zwischen der Spannmutter und der Basis (33) des Gehäuses so angeordnet ist, dass sich die Spannmutter beim Drehen der Aktivierungsmutter axial bewegt, um das nachgiebige Element mit Druck zu beaufschlagen.

2. Ein Streckspanner (1) nach Anspruch 1, weiterhin umfassend einen Vorspannungsmechanismus (5), wobei der Vorspannungsmechanismus folgendes umfasst:
eine Vorspannstange (54) mit einem Durchgangsloch für den Führungsdraht, wobei die Vorspannstange ein Außengewinde hat,
eine Vorspannungsdrahtverriegelung (53), die am Führungsdraht unter der Vorspannstange festgeklemmt ist und den Führungsdraht in Bezug auf die Vorspannstange befestigt,
eine Druckmutter (52), die an der Vorspannstange angeordnet ist und ein Innengewinde hat, das mit dem Außengewinde der Vorspannstange zusammenpasst, so dass ein erster Abstand zwischen der Druckmutter und der Vorspannungsdrahtverriegelung eingestellt werden kann.

3. Ein Streckspanner (1) nach Anspruch 2, wobei der Vorspannmechanismus weiterhin eine Vorspannbasis (51) umfasst, die in Bezug auf die Basis des Gehäuses befestigt ist, wobei die Druckmutter angeordnet ist, um beim Vorspannen des Führungsdrahts an die Vorspannbasis anzugrenzen.

4. Ein Streckspanner (1) nach einem der Ansprüche 2-3, wobei der Vorspannmechanismus weiterhin folgendes umfasst:
eine Sicherungsmutter (57) zum Einklemmen gegen eine Vorspannmutter (56) beim Vorspannen des Führungsdrahtes; wobei die Vorspannmutter und die Sicherungsmutter an der Vorspannstange angeordnet sind und ein Innengewinde haben, das mit dem Außengewinde der Vorspannstange zusammenpasst, so dass ein zweiter Abstand zwischen der Druckmutter und jeweils der Vorspannmutter und der Sicherungsmutter eingestellt werden kann.

5. Ein Streckspanner (1) nach einem der Ansprüche 1-4, wobei das Gehäuse (3) weiterhin folgendes umfasst:
zwei Abdeckungsteile (36A, 36B), die teleskopisch miteinander verbunden und zur Aufnahme des nachgiebigen Elements konfiguriert sind.

6. Ein Streckspanner (1) nach Anspruch 5, wobei das Gehäuse weiterhin folgendes umfasst:
ein Maßband (37), das an einem Abdeckungsteil (36B) des Gehäuses bereitgestellt ist und eine zusammenwirkende Indexmarkierung am anderen Abdeckungsteil (36A),
eine zweite Öffnung (22), die in der Spannbasis angeordnet und konfiguriert ist, um eine Ansicht des Maßbandes zu bieten.

7. Ein Streckspanner (1) nach einem der Ansprüche 1-6, wobei die Spannmutter in Bezug auf die hohle Gewindewelle drehfest angeordnet ist.

8. Ein Streckspanner (1) nach einem der Ansprüche 2-7, wobei die Vorspannbasis durch Verbindungselemente (55) an dem Gehäuse befestigt ist, so dass eine Verriegelungskammer (6) zwischen der Vorspannbasis, den Verbindungselementen und der Basis des Gehäuses definiert ist.

9. Ein Streckspanner (1) nach einem der Ansprüche 1-8, wobei das nachgiebige Element eine Feder umfasst.

10. Ein drahtgeführter Aufzug umfassend einen Streckspanner (1) nach einem der Ansprüche 1-9.

11. Ein Windturbinenturm umfassend einen Streckspanner (1) nach einem der Ansprüche 1-9.

## Revendications

1. Tendeur d'étirage (1) pour tendre un câble de guidage (100) comprenant :
une base de tendeur (2) pouvant être attachée à une plate-forme élévatrice (200) et ayant une première ouverture (21),
un boîtier (3) situé sur un côté inférieur de la base de tendeur pour loger le câble de guidage, et
un dispositif de fixation à fil (4) serré sur le fil de guidage sous le boîtier et fixant le fil de guidage par rapport à une base du boîtier,
**caractérisé en ce que** le boîtier comprend :
un arbre fileté creux (34) qui s'étend à travers la première ouverture d'un côté supérieur de la base de tendeur au côté inférieur de la base de tendeur, l'arbre fileté creux ayant un filetage extérieur et un trou débouchant intérieur pour le fil de guidage,
un écrou d'activation (35) situé sur le côté supérieur de la base de tendeur, et fixé en rotation à l'arbre fileté creux,
un palier (342) entre l'arbre fileté creux et le côté inférieur de la base de tendeur pour permettre une rotation de l'arbre fileté creux par rapport à la base de tendeur,
un écrou de tension (31) avec un filetage en correspondance avec le filetage extérieur de l'arbre fileté creux, dans lequel l'écrou de tension est déplaçable axialement dans l'intérieur du boîtier mais fixé en rotation au boîtier,
un élément résilient (32) disposé entre l'écrou de tension et la base (33) du boîtier de telle sorte que lors de la rotation de l'écrou d'activation, l'écrou de tension se déplace axialement afin de comprimer l'élément résilient.

2. Un tendeur d'étirage (1) selon la revendication 1, comprenant en outre un mécanisme de prétension (5), le mécanisme de prétension comprenant :
une tige de prétension (54) avec un trou débouchant pour le fil de guidage, la tige de prétension ayant un filetage extérieur,
un dispositif de fixation à fil de prétension (53) serré sur le câble de guidage sous la tige de prétension fixant le câble de guidage par rapport à la tige de prétension,
un écrou de poussée (52) disposé sur la tige de prétension ayant un filetage intérieur en correspondance avec le filetage extérieur de la tige de prétension, de telle sorte qu'une première distance entre l'écrou de poussée et le dispositif de fixation à fil de prétension peut être ajustée.

3. Un tendeur d'étirage (1) selon la revendication 2, dans lequel le mécanisme de prétension comprend en outre une base de prétendeur (51) qui est fixée par rapport à la base du boîtier, dans lequel l'écrou de poussée est disposé pour venir en butée contre la base de prétendeur lors de la prétension du câble de guidage.

4. Un tendeur d'étirage (1) selon l'une quelconque des revendications 2-3, dans lequel le mécanisme de prétension comprend en outre :
un contre-écrou (57) destiné à être coincé contre un écrou de prétension (56) lors de la prétension du câble de guidage ; dans lequel l'écrou de prétension et le contre-écrou sont disposés sur la tige de prétension et ont un filetage intérieur en correspondance avec le filetage extérieur de la tige de prétension, de telle sorte qu'une seconde distance entre l'écrou de poussée et respectivement l'écrou de prétension et le contre-écrou peut être ajustée.

5. Un tendeur d'étirage (1) selon l'une quelconque des revendications 1-4, dans lequel le boîtier (3) comprend en outre :
deux parties de couvercle (36A, 36B) reliées télescopiquement l'une à l'autre et configurées pour loger l'élément résilient.

6. Un tendeur d'étirage (1) selon la revendication 5, dans lequel le boîtier comprend en outre :
un ruban à mesurer (37) fourni dans une partie de couvercle (36B) du boîtier et une marque d'index coopérante dans l'autre partie de couvercle (36A),
une seconde ouverture (22) disposée dans la base de tendeur et configurée pour fournir une vue du ruban à mesurer.

7. Un tendeur d'étirage (1) selon l'une quelconque des revendications 1-6, dans lequel l'écrou de tension est disposé fixe en rotation par rapport à l'arbre fileté creux.

8. Un tendeur d'étirage (1) selon l'une quelconque des revendications 2-7, dans lequel la base de prétendeur est fixée au boîtier moyennant des éléments de raccordement (55) de sorte qu'une chambre de verrouillage (6) est définie entre la base de prétendeur, les éléments de raccordement et la base du boîtier.

9. Un tendeur d'étirage (1) selon l'une quelconque des revendications 1-8, dans lequel l'élément résilient comprend un ressort.

10. Un ascenseur guidé par fil comprenant un tendeur d'étirage (1) selon l'une quelconque des revendications 1-9.

11. Une tour d'éolienne comprenant un tendeur d'étirage (1) selon l'une quelconque des revendications 1-9.
